# EUROPEAN PATENT APPLICATION

(11) **EP 1 513 081 A1**
(43) Date of publication of application: **09.03.2005**
(21) Application number: 02730870.9
(22) Date of filing: 03.06.2002
(51) Int. Cl.: G06F 17/60

(54) **BALANCE MANAGEMENT SYSTEM**

(71) Applicant: Honda Giken Kogyo Kabushiki Kaisha, Minato-ku, Tokyo 107-8556 (JP)
(72) Inventor: MAEKAWA, Masahiko, HONDA GIKEN KOGYO K. K., Tokyo 107-8556 (JP); FURUYAMA, Sanae, HONDA GIKEN KOGYO K. K., Tokyo 107-8556 (JP)
(74) Representative: Butler, Michael John
(86) International application number: PCT/JP2002/005420
(87) International publication number: WO 2003/102833

(57) **Abstract**

A system for enabling a user to simply and precisely grasp various information on balances occurring in one or more processes. The balance management system comprises a server (100) and is provided with a DB (information management means) (110), information acquiring means (120), information updating means (130), and information providing means (140). The DB (110) manages information on a balance of each balance item and information on a correspondence for each process that a balance of which balance item reflects a balance amount of which process item. The information acquiring means (120) acquires information on a process item and a balance amount corresponding to the process item, from a first terminal corresponding to each process. The information updating means (130) updates the information on the balance of the balance item corresponding to the process item, on the basis of the information on the correspondence managed by the DB (110) and the information on the process item and the balance amount acquired by the information acquiring means (120). The information providing means (140) provides a second terminal (20) with the information on the balance item and the balance for one or more processes managed by the DB (110).

## Description

### Technical Field

The present invention relates to a system for managing balances that occur in one or more processes.

### Background Art

In general, manufacturing and shipping of one product include a plurality of processes. For example, manufacturing a car includes a plurality of processes such as assembling an engine, welding a car body, painting the car body, attaching a plurality of components such as an engine to the car body, and inspecting a finished car.

In each process, an equipment purchase causes various types of expenditures and incomes having various fluctuations, due to occurrences of a decrease (expenditure) in a money balance and an increase (income) in a material balance and due to a high or low price of equipment purchased.

With increasingly complicated products, however, the number of processes becomes enormous and each process is more complicated. This results in too many types of expenditures and incomes and too many patterns of fluctuations in each process. Thereby, in some cases, balances in a plurality of processes are entangled, and thus it is hard for a user to grasp the balance conditions.

Therefore, it is an object of the present invention to provide a system for enabling a user to simply and precisely grasp various information on the balance occurring in one or more processes.

### Disclosure of the Invention

A balance management system of the present invention to attain the above object comprises: information management means for managing information on a balance of a balance item and information on a correspondence for each process that a balance of which balance item reflects a balance amount of which process item; information acquiring means for acquiring information on a process item and a balance amount corresponding to the process item, from a first terminal corresponding to each process; information updating means for updating the information on the balance of the balance item corresponding to the process item, on the basis of the information on the correspondence managed by the information management means and the information on the process item and the balance amount acquired by the information acquiring means; and information providing means for providing a second terminal with the information on the balance item and the balance for one or more processes managed by the information management means.

According to the present invention, the balance of each balance item corresponds to each process and is managed by the information management means. Thereby, it is possible to prevent a problem of the entangled balances in a plurality of processes or the like. Therefore, even if there are too many types of expenditures and incomes and too many patterns of fluctuations in each process, a user can simply and precisely grasp information on various balances in one or more processes through the second terminal.

Furthermore, the balance management system of the present invention further comprises first means for enabling setting of the information on the correspondence according to a user's intention.

Still further, the balance management system of the present invention is characterized in that the first means provides a program for giving a setting operation function of the information on the correspondence to a third terminal.

According to the present invention, in view of circumstances that in general a difference in a process leads to a difference in a process item and the correspondence that the balance of which balance item reflects the balance amount of which process item varies with the process, a user can set information on the correspondence according to his/her intention. Therefore, the balance of the balance item can be managed flexibly according to various conditions in each process.

Furthermore, the balance management system of the present invention comprises second means for enabling a selection of a display pattern of information on the balance of the balance item according to the user's intention and a display of the information according to the selected pattern.

Still further, the balance management system of the present invention is characterized in that the second means provides a program for giving the second terminal a selecting operation function of a display pattern of the information on the balance of the balance item and a display function of the information on the balance of the balance item according to the selected pattern through the selecting operation.

According to the present invention, a user can select a display pattern of the balance of the balance item according to his/her intention to grasp information on the balance of the balance item displayed according to the selected display pattern. The aforementioned selectable display pattern facilitates a grasp of the balance of each balance item for one or more processes through a user's vision.

### Brief Description of the Drawings

Fig. 1 is a configuration explanatory diagram of a balance management system of this embodiment.
Figs. 2 to 4 are function explanatory diagrams of the balance management system of this embodiment.

### Best Mode for Carrying out the Invention

Preferred embodiments of the balance management system according to the present invention will be described below by using the accompanying drawings.

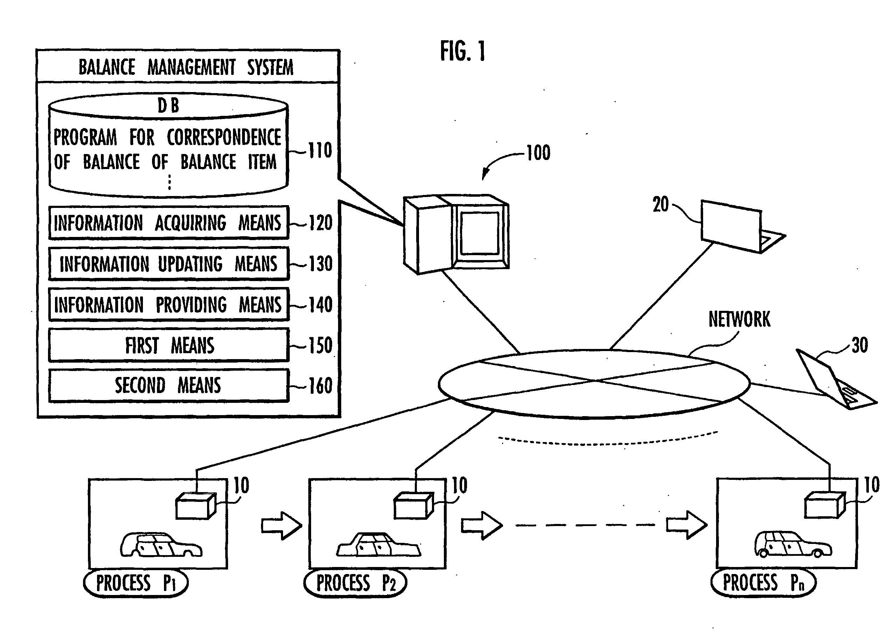

The balance management system of this embodiment is applied to a production line of automobiles or the like including a plurality of processes p1, p2, ---, pn shown in Fig. 1.

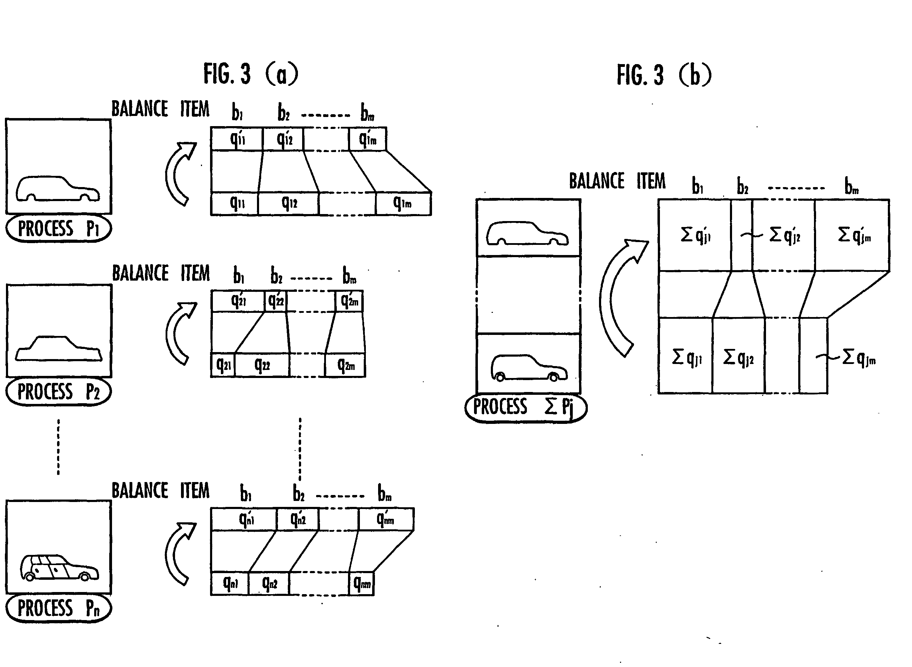

Moreover, this system can manage the conditions, as shown in Fig. 3(a), where a balance of each balance item bk (k = 1, 2, --, m) is "qjk" for each process pj (j = 1, 2, --, n) and where the balance changes from "qjk" to "qjk'" (See the arrows). Furthermore, this system can manage the conditions, as shown in Fig. 3(b), where the total balance of each balance item bk is "∑qjk" for a plurality of processes ∑pj and where the total balance changes from "∑qjk" to "∑qjk'" (See the arrow).

As shown in Fig. 1, this system comprises a server 100, which is connected in such a way that it can communicate with a plurality of first terminals 10 installed at the sites of respective processes pj, a second terminal 20, and a third terminal 30 via a network such as the Internet or a LAN.

Furthermore, this system comprises DB (database/information management means) 110, information acquiring means 120, information updating means 130, information providing means 140, first means 150, and second means 160.

The DB 110 manages various information as data for each process pj, such as information on a balance of each balance item and each correspondence described later, and it further manages programs provided to the outside via the network.

The information acquiring means 120 acquires various data from the outside, for example, by acquiring information on a process item and a balance amount via the network from the first terminal 10.

The information updating means 130 updates information on the balance of the balance item managed by the DB 110, on the basis of the information on the correspondence managed by the DB 110 and the information on the process item and the balance amount acquired by the data acquiring means 120.

The information providing means 140 provides the second terminal 110 with various information including the information on the balance item and the balance managed by the DB 110 via the network.

The first means 150 provides the third terminal with a program for giving a setting operation function of information on the correspondence so as to enable the setting of information on the correspondence according to a user's intention in the third terminal 30.

The second means 160 provides a program for giving the second terminal a selecting operation function of a display pattern of the information on the balance of the balance item and a display function of the information on the balance of the balance item according to the selected pattern through the selecting operation so as to enable the second terminal 20 to select the display pattern of the information on the balance of the balance item according to a user's intention and to display the information according to the selected pattern.

The terminals 10 to 30 each have an HDD (storage device) and a CPU (processor), and if appropriate, a monitor (image display means), a keyboard and a mouse (input devices), or the like (not shown).

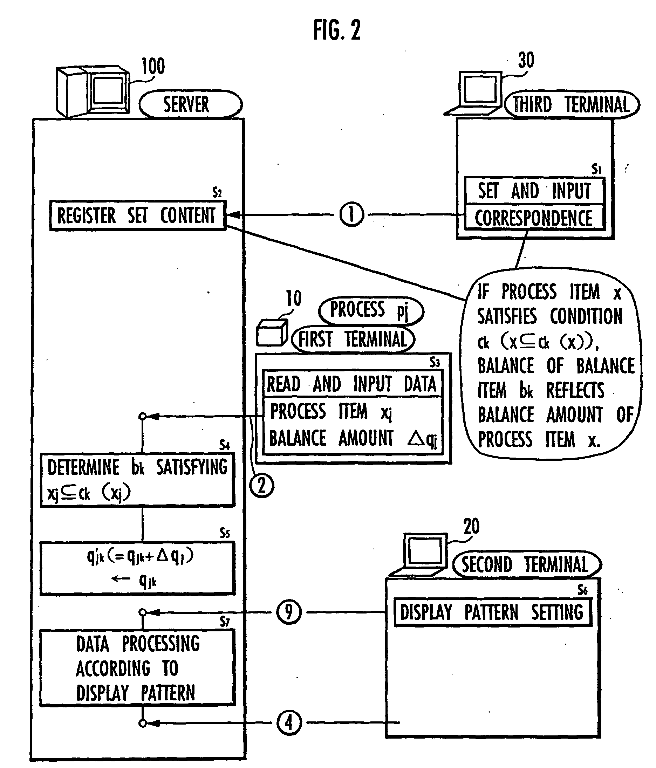

The following describes the functions of the balance management system having the aforementioned configuration by using Figs. 2 to 4.

Note here that "uploaded to the server 100" means that information is acquired as data by the information acquiring means 120 from the outside via the network. Furthermore, "downloaded from the server 100" means that the information providing means 140, the first means 150, or the second means 160 provides information as data or a program to the outside via the network.

While the following describes only exchanges of main data or the like, various data in communication protocols or so may be exchanged between the server 100 and each of the terminals 10 to 30.

First, if a user allows the third terminal 30 to log in to the server 100, a program is downloaded from the server to the third terminal 30. The program download causes a window (not shown) to be displayed on a monitor of the third terminal 30. Also, it enables the user to set and input a correspondence for each process pj that "if a process item x satisfies a condition ck (hereinafter, referred to as "x ⊆ ck (x)" for convenience), the balance of the balance item bk reflects the balance amount of the process item x" in accordance with a setting input field of the window through an operation of an input device. Note that, however, the window may be displayed on the monitor of the third terminal 30 by downloading trigger data capable of starting a program already installed or downloaded to the third terminal 30.

Upon setting and inputting the correspondence through the user's operation in the third terminal 30 (s1 in Fig. 2), information on the set and input correspondence is uploaded from the third terminal 30 to the server 100 (an arrow ① in Fig. 2) and then managed by the DB 110 (s2 in Fig. 2).

Subsequently, for each process pj, the first terminal 10 reads information on a process item xj and a balance amount Δqj corresponding to the process item xj (s3 in Fig. 2). Then, the information is uploaded from the first terminal 10 to the server 100 (an arrow ② in Fig. 2).

At least one of the information on the process item xj and the balance amount Δqj may be previously appended to a product or a component in the production process or a manufacturing device in the form of a bar code, so that the first terminal 10 may read it by means of the bar code. Moreover, at least one of the information on the process item xj and the balance amount Δqj may be input to the first terminal 10 through a user's input device operation. Furthermore, if the information on the balance amount Δqj depends upon, for example, the number of components, it may be identified by information on the number of components on condition that the DB 110 manages a unit price of the relevant component.

According to the information on the process item xj and the balance amount Δqj uploaded to the server 100, the information updating means 130 determines the balance item bk satisfying xj ⊆ ck (xj) (s4 in Fig. 2). Furthermore, information on the balance qjk of the balance item bk for each process pj is updated so as to be information on the balance qjk (= qjk + Δqj) according to the information on the balance amount Δqj (s5 in Fig. 2).

Subsequently, if the user allows the second terminal 20 to log in to the server 100, a program is downloaded from the server 100 to the second terminal 20. The program download causes a window (not shown) to be displayed on the monitor of the second terminal 20. Also, it enables the user to set and input information on a display pattern of the balance of the balance item in accordance with a setting input field of the window through an operation of the input device.

Upon setting and inputting the information on the display pattern through the user's operation in the second terminal 20 (s6 in Fig. 2), information on the set and input display pattern is uploaded from the second terminal 20 to the server 100 (an arrow ③ in Fig. 2).

According to the information on the display pattern uploaded to the server 100, the information updating means 130 processes the information managed by the DB 110 (s7 in Fig. 2). Furthermore, the processed information is downloaded from the server 100 to the second terminal 20 (an arrow ④ in Fig. 2) and the monitor of the second terminal 20 displays the information on the balance Δqjk of each balance item according to the display pattern (See Figs. 3(a) and 3(b)).

Alternatively, various information managed by the DB 110 may be downloaded from the server 100 to the second terminal 20 without processing to carry out information processing according to the display pattern in the second terminal 20.

Various "display patterns" are considered available, as follows: a pattern for displaying the balance qjk of each balance item bk of one process pj or a pattern for displaying its fluctuation Δqj (See Fig. 3(a)), a pattern for displaying a total balance ∑jqjk of each balance item bk of a plurality of processes ∑pj or a pattern for displaying its fluctuation ∑jΔqj (See Fig. 3(b)), a pattern for displaying total balances by category after categorizing some balance items bk, a pattern for displaying the balance qjk or the total balance ∑jqjk of the balance item bk according to a process item xj, and a combined display pattern made of these patterns.

According to this system, the information on the balance qjk of each balance item bk corresponds to each process pj and they are managed by the DB 110, thereby preventing a problem of entangled information on the balances in the plurality of processes pj. Therefore, even if there are too many types of expenditures and incomes and too many patterns of the fluctuations Δq in each process pj, the user can simply and precisely grasp various balances q in one or more processes x through the second terminal (See Figs. 3(a) and 3(b)).

Moreover, in view of circumstances that in general a difference in a process pj leads to a difference in a process item xj and the correspondence that the balance qjk of which balance item bk reflects the balance amount Δqj of which process item xj varies with the process, the user can set information on the correspondence in the third terminal 30 (See s1 in Fig 2). Therefore, the balance qjk of the balance item bk can be managed flexibly according to various conditions in each process pj.

Furthermore, in view of circumstances that it may be important to grasp the balance qjk of the balance item bk for each process item xj depending on the process pj, the user can grasp the balance of each balance item "for each process item" regarding one or more processes through the second terminal 20.

Moreover, the user can select a display pattern of information on the balance qjk of the balance item bk through the second terminal 20 (See s6 in Fig. 2) and grasp information on the balance qjk or the like of the balance item bj displayed according to the selected display pattern (See Figs. 3(a) and 3(b)). The aforementioned selectable display pattern facilitates a grasp of the balance qjk or the like of each balance item bk for one or more processes pj through a user's vision.

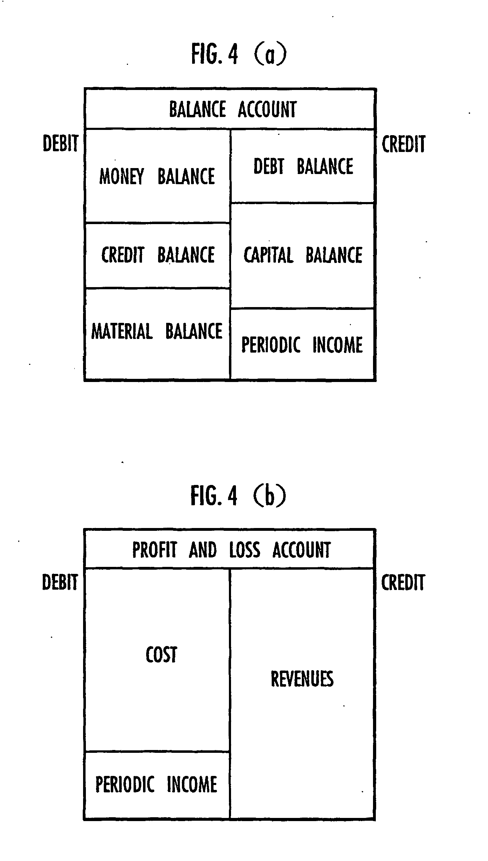

If the balance items b1, b2, --, and bm are "money," "credit," 'material goods," "debt," "capital," and "periodic income," the monitor of the second terminal 20 may display "a balance sheet" shown in Fig. 4(a). If the balance items b1, b2, --, and bm are "cost," "periodic income," and "revenues," the monitor of the second terminal 20 may display "the profit and loss statement" shown in Fig. 4(b).

While the server 100 constituting the balance management system is provided separately from the first terminal 10, the second terminal 20, and the third terminal 30 in this embodiment, the server 100 may be integrated with the first terminal 10, the second terminal 20, or the third terminal 30 as an alternative embodiment.

Specifically, if the server 100 is formed as one terminal (not shown) with the second terminal 20, an HDD and a CPU of the terminal may process display pattern data (See the arrow ③ in Fig. 2) according to a user's operation in this terminal without an intervention of the network, and a monitor of the terminal may display the balance qjk or the like of the balance item bk according to the display pattern. In addition, the process item data or the like may be downloaded from the first terminal 10 to this terminal via the network (See the arrow ② in Fig. 2).

While the first terminal 10, the second terminal 20, and the third terminal 30 are provided separately in this embodiment, one terminal (not shown) may function as a plurality of terminals among these three terminals.

Specifically, the first terminal 10 and the second terminal 20 may be formed as one terminal (not shown), so that "the process item xj" and "the balance amount Δqj" can be read from or input to this terminal (See s3 in Fig. 2) and so that the terminal can grasp information on the balance qjk of each balance item bk for one or more processes pj (See Fig. 3). Alternatively, the first terminal 10 and the third terminal 30 may be formed as one terminal (not shown), so that the information on the process item xj and the balance amount Δqj can be read from or input to the terminal (See s3 in Fig. 2) and so that the terminal can set information on the correspondence (See s1 in Fig. 2). Furthermore, the second terminal 20 and the third terminal 30 may be formed as one terminal (not shown), so that the user can grasp information on the balance qjk of each balance item bk for one or more processes pj by using this terminal (See Fig. 3) and can set information on the correspondence (See s1 in Fig. 2).

While the balance management system comprises the server 100 in this embodiment, the balance management system may comprise a plurality of servers (not shown) as an alternative embodiment. In addition, the DB 110 may at least partially comprise one or more database management systems (DBMS).

## Claims

1. A balance management system for managing balances occurring in a plurality of processes, comprising:
information management means for managing information on a balance of a balance item and information on a correspondence for each process that a balance of which balance item reflects a balance amount of which process item;
information acquiring means for acquiring information on a process item and a balance amount corresponding to the process item, from a first terminal corresponding to each process;
information updating means for updating the information on the balance of the balance item corresponding to the process item, on the basis of the information on the correspondence managed by the information management means and the information on the process item and the balance amount acquired by the information acquiring means; and
information providing means for providing a second terminal with the information on the balance item and the balance for one or more processes managed by the information management means.

2. The balance management system according to claim 1, comprising first means for enabling setting of the information on the correspondence according to a user's intention.

3. The balance management system according to claim 2, wherein the first means provides a program for giving a setting operation function of the information on the correspondence to a third terminal.

4. The balance management system according to claim 1, comprising second means for enabling a selection of a display pattern of information on the balance of the balance item according to a user's intention and a display of the information according to the selected pattern.

5. The balance management system according to claim 4, wherein the second means provides a program for giving the second terminal a selecting operation function of a display pattern of the information on the balance of the balance item and a display function of the information on the balance of the balance item according to the selected pattern through the selecting operation.
